# EUROPÄISCHE PATENTANMELDUNG

(11) **EP 2 546 583 A2**
(43) Veröffentlichungstag der Anmeldung: **16.01.2013**
(21) Anmeldenummer: 12175557.3
(22) Anmeldetag: 09.07.2012
(51) Int. Cl.: F24J 2/46

(54) **Sonnenkollektor**

(30) Priorität: 15.07.2011 AT 10412011
(71) Anmelder: TSW Holding GmbH, 6306 Söll (AT)
(72) Erfinder: Teufel, Arnold, 6353 Oberndorf (AT)
(74) Vertreter: Hübscher, Helmut

(57) **Zusammenfassung**

Es wird ein Sonnenkollektor mit wenigstens zwei Kollektoreinheiten, die je ein Gehäuse (2) mit Durchführungen (3) für einen Wärmeträger aufnehmende Leitungsrohre (4) umfassen, und mit einer einen Dehnungsausgleich bildenden Rohrstutzen (9) zwischen den Enden (8) der die Durchführungen (3) gleitfähig durchsetzenden Leitungsrohre (4) beschrieben. Um vorteilhafte Konstruktionsbedingungen zu schaffen, wird vorgeschlagen, dass die Rohrstutzen (9) und die Enden (8) der Leitungsrohre (4) ineinander unter Zwischenlage von Ringdichtungen (10) verschiebbar geführt sind.

## Beschreibung

Die Erfindung bezieht sich auf einen Sonnenkollektor mit wenigstens zwei Kollektoreinheiten, die je ein Gehäuse mit Durchführungen für einen Wärmeträger aufnehmende Leitungsrohre umfassen, und mit einer einen Dehnungsausgleich bildenden Rohrstutzen zwischen den Enden der die Durchführungen gleitfähig durchsetzenden Leitungsrohre.

Werden Sonnenkollektoren aus einzelnen je eine Baueinheit bildenden Kollektoreinheiten zusammengesetzt, so müssen die die Gehäuse dieser Kollektoreinheiten durchsetzenden, zum Zu- und Abführen eines Wärmeträgers vorgesehenen Sammel- und Verteilerleitungen der Kollektoreinheiten miteinander so verbunden werden, dass die unvermeidbaren Längenänderungen aufgrund von Wärmedehnungen aufgenommen werden können. Zu diesem Zweck ist es bekannt, die Enden der die Gehäusedurchführungen durchsetzenden Leitungsrohre miteinander über einen als Wellrohr ausgebildeten Rohrstutzen miteinander zu verbinden, sodass auftretende axiale Wärmedehnungen vom Wellrohr aufgenommen werden können. Abgesehen davon, dass der dichte Anschluss dieses Rohrstutzens an die Enden der die Gehäuse durchsetzenden, miteinander zu verbindenden Leitungsrohre über Schellen, die die Endflansche der Rohrleitungen bzw. des Rohrstutzens unter Zwischenlage einer Ringdichtung umschließen, aufwendig ist und die Dichtheit dieser Rohrverbindung von der über die Schellen aufgebrachten Schließkraft abhängt, bleibt der für den Längenausgleich zu überwindende Formänderungswiderstand des Wellrohrstutzens vergleichsweise hoch.

Der Erfindung liegt somit die Aufgabe zugrunde, die Verbindung der die Gehäuse eines Sonnenkollektors der eingangs geschilderten Art durchsetzenden Leitungsrohre so auszubilden, dass nicht nur einfache Montagebedingungen, die keinen Einfluss auf die Dichtheit der Rohrverbindungen haben, gewährleistet, sondern auch die Wärmedehnungen ohne zusätzliche Belastungen der Leitungsrohre aufgenommen werden können.

Die Erfindung löst die gestellte Aufgabe dadurch, dass die Rohrstutzen und die Enden der Leitungsrohre ineinander unter Zwischenlage von Ringdichtungen verschiebbar geführt sind.

Da die Enden der Leitungsrohre und die Rohrstutzen ineinander verschiebbar geführt sind, bedarf es keiner Formänderungsarbeit, um einen Dehnungsausgleich zu schaffen. Es muss lediglich der für die Abdichtung zwischen den Rohrstutzen und den Enden der Leitungsrohre, durch die radiale Vorspannung der Ringdichtungen bedingte Reibungswiderstand überwunden werden, sodass sich die Leitungsrohre gegenüber den sie verbindenden Rohrstutzen frei in axialer Richtung verlagern können. Die Montage ist einfach, weil die Enden der Leitungsrohre und die sie verbindenden Rohrstutzen lediglich unter Zwischenlage von Ringdichtungen ineinandergesteckt werden müssen. Die Dichtwirkung hängt dabei nur von der beim Ineinandergreifen der Leitungsrohre und Rohrstutzen auf die Ringdichtung ausgeübte radialen Vorspannung ab, die durch die Abmessungen der zusammenwirkenden Konstruktionsteile konstruktiv vorgegeben ist und nicht durch den Montagevorgang beeinflusst wird.

Eine Ausführungsform der erfindungsgemäßen Verbindung der die Gehäuse der Kollektoreinheiten durchsetzenden Leitungsrohre besteht darin, dass die die Durchführungen durchsetzenden Enden der Leitungsrohre aufgeweitete Muffen zur Aufnahme des Rohrstutzens bilden. Eine solche Ausführungsform hat den Vorteil, dass herkömmliche Durchführungen für die Leitungsrohre eingesetzt werden können, weil die Rohrdurchführungen von der Rohrverbindung nicht betroffen werden. Allerdings sind die Leitungsrohre in ihrem vorstehenden Endbereich muffenartig aufzuweiten, um den Verbindungsrohrstutzen in die Rohrenden einsetzen zu können, ohne einen erhöhten Strömungswiderstand in Kauf nehmen zu müssen.

Sollen die Leitungsrohre in ihrem Endbereich unverändert bleiben, so kann in einer weiteren Ausführungsform der Rohrstutzen die Enden der Leitungsrohre umschließen. Damit in diesem Fall der Rohrstutzen axial festgelegt werden kann, kann der Rohrstutzen in wenigstens eine der beiden Durchführungen für die Leitungsrohre eingesetzt sein. Mit dem Einsetzen des Rohrstutzens in die Durchführungen für die zu verbindenden Rohrleitungen wird eine nach außen vollständig abgedeckte Rohrverbindung erreicht.

Die Durchführungen für die Leitungsrohre können vorteilhaft auch für die notwendige Belüftung der Gehäuse der Kollektoreinheiten genützt werden. Zu diesem Zweck können die elastomeren Durchführungen einen die Leitungsrohre bzw. den Rohrstutzen umschließenden, einerseits mit dem Gehäuseinneren und anderseits mit einem nach unten weisenden Belüftungsansatz auf der Gehäuseaußenseite strömungsverbundenen Ringspalt bilden. Dieser Ringspalt bringt die Wirkung einer Labyrinthdichtung mit sich, sodass das Gehäuseinnere trotz seiner Belüftung vor einer Verschmutzung bewahrt bleibt. Die nach unten weisenden Belüftungsansätze auf der Gehäuseaußenseite verhindern das Eindringen von Flüssigkeit in das Gehäuseinnere.

In der Zeichnung ist der Erfindungsgegenstand beispielsweise dargestellt. Es zeigen
- Fig. 1: einen erfindungsgemäßen Sonnenkollektor ausschnittsweise im Bereich einer Rohrverbindung zwischen zwei Kollektoreinheiten in einem schematischen Axialschnitt und
- Fig. 2: eine der Fig. 1 entsprechende Darstellung einer Ausführungsvariante eines erfindungsgemäßen Sonnenkollektors.

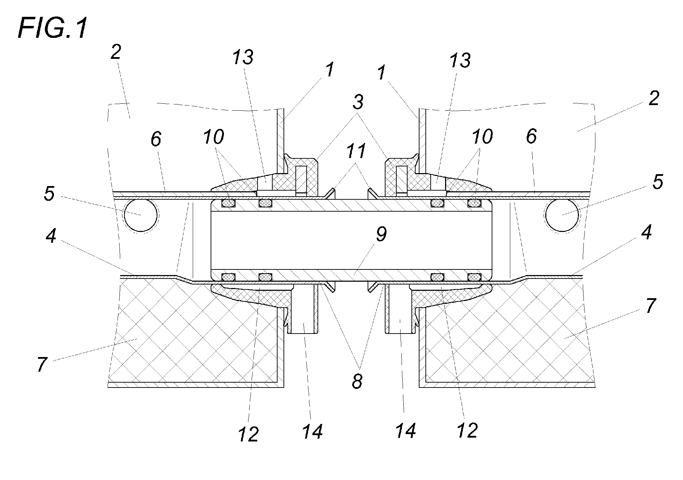

Gemäß dem Ausführungsbeispiel nach der Fig. 1 weisen die einander zugekehrten Stirnwände 1 der Gehäuse 2 zweier Kollektoreinheiten je eine elastomere Durchführung 3 für Leitungsrohre 4 zum Zu- und Abführen eines Wärmeträgers, im Allgemeinen Wasser, auf. Zwischen den als Verteiler- und Sammelleitungen dienenden Leitungsrohren 4 der Kollektoreinheiten sind parallel geschaltete Strömungsrohre 5 vorgesehen. Zur besseren Wärmeübertragung auf den Wärmeträger sind die Strömungsrohre 5 sowie die durch die Leitungsrohre 4 gebildeten Verteiler- und Sammelleitungen mit einer Absorberplatte 6 verbunden. Auf der der Absorberplatte 6 gegenüberliegenden Seite ist im Gehäuse 2 eine Wärmedämmung 7 angeordnet.

Um die die Durchführungen 3 durchsetzenden, über die Stirnwand 1 des Gehäuses 2 vorstehenden Enden 8 der Leitungsrohre 4 miteinander so zu verbinden, dass ein vorteilhafter Dehnungsausgleich sichergestellt werden kann, ohne die Dichtheit der Rohrverbindung zu beeinträchtigen, ist ein Rohrstutzen 9 vorgesehen, der in die muffenartig erweiterten Enden 8 der Leitungsrohre 4 unter Zwischenlage von Ringdichtungen 10 axial verschiebbar eingreift. Die in Umfangsnuten des Rohrstutzens 9 eingesetzten Ringdichtungen 10 werden in den Umfangsnuten in axialer Richtung gesichert, sodass sich mit dem Einschieben des Rohrstutzens 9 in die Enden 8 der Rohrleitungen 4 die erforderliche Dichtheit der Rohrverbindung selbständig einstellt. Zum Erleichtern der Einführung des Rohrstutzens 9 in die Enden 8 der Rohrleitungen 4 sind die Enden 8 der Rohrleitungen 4 mit einer konischen Einführerweiterung 11 versehen.

Wie sich aus der Fig. 1 unmittelbar ablesen lässt, braucht der Rohrstutzen 9 lediglich in die muffenartig erweiterten Enden 8 der Rohrleitungen 4 eingeführt zu werden, um die Rohrverbindung zwischen den Rohrleitungen 4 zweier aneinander angrenzender Kollektoreinheiten herzustellen. Da der mögliche Verschiebeweg des Rohrstutzens 9 gegenüber den anschließenden Rohrleitungen 4 durch den Übergang der muffenartigen Erweiterung der Rohrenden 8 in die Rohrleitungen 4 begrenzt wird, bedarf es hiefür keiner zusätzlichen konstruktiven Maßnahmen.

Das Vorsehen der elastomeren Durchführungen 3 für die Rohrleitungen 4, die diese Durchführungen 3 dicht durchsetzen, kann auch zur Belüftung des Gehäuseinneren genützt werden, indem die elastomeren Durchführungen 3 einen die Leitungsrohre 4 umschließenden Ringspalt 12 bilden, der über wenigstens eine Lüftungsöffnung 13 mit dem Gehäuseinneren und über einen Belüftungsansatz 14 außerhalb des Gehäuses 2 mit dem Gehäuseaußenraum in Strömungsverbindung steht. Da die Belüftungsansätze 14 nach unten weisen, kann keine Flüssigkeit von außen in das Gehäuse 2 eindringen. Der Ringspalt 12 bildet außerdem eine Art Labyrinthdichtung, die eine Verschmutzung des Gehäuseinneren durch von außen eindringende Feststoffe verhindert.

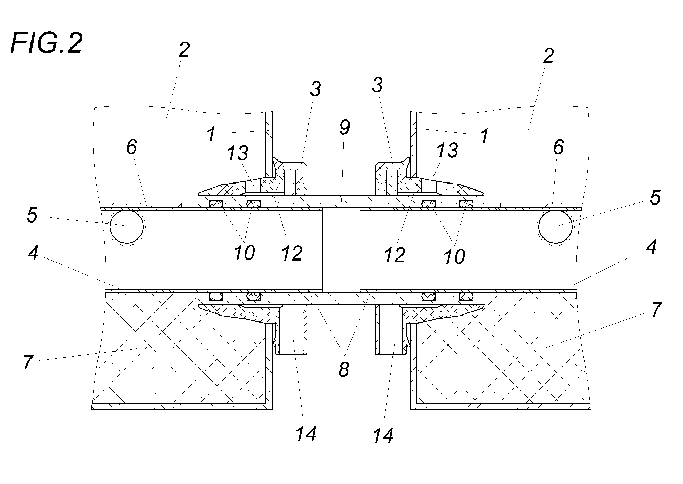

Die Ausführungsform nach der Fig. 2 unterscheidet sich von der nach der Fig. 1 im Wesentlichen nur dadurch, dass nicht der Rohrstutzen 9 in die Enden 8 der Rohrleitungen 4 ragt, sondern die Enden 8 der Rohrleitungen 4 in den Rohrstutzen 9 verschiebbar geführt sind. Dementsprechend sind die Ringdichtungen 10 in Umfangsnuten auf der Innenseite des Rohrstutzens 9 vorgesehen. Außerdem bedarf es keiner muffenartigen Erweiterung der Enden 8 der Rohrleitungen 4, um einen gleichbleibenden Strömungsdurchgang zwischen den zu verbindenden Rohrleitungen zu gewährleisten. Allerdings ist im Allgemeinen der Rohrstutzen 9 in axialer Richtung gegenüber einem Gehäuse 2 festzulegen. Dies kann in einfacher Weise dadurch geschehen, dass der Rohrstutzen 9 gegenüber einer der beiden Durchführungen 3 axial festgelegt wird, z. B. durch eine Klebung. Die Funktion dieser Rohrverbindung bleibt der nach dem Ausführungsbeispiel der Fig. 1 gleich, weil zum Dehnungsausgleich die Enden 8 der Rohrleitungen 4 und des Rohrstutzens 9 unter Zwischenlage von Ringdichtungen 10 ineinander axial verschiebbar geführt sind und daher relativ zueinander zumindest im Bereich der erwarteten Längsdehnungen in axialer Richtung frei verlagert werden können.

## Patentansprüche

1. Sonnenkollektor mit wenigstens zwei Kollektoreinheiten, die je ein Gehäuse (2) mit Durchführungen (3) für einen Wärmeträger aufnehmende Leitungsrohre (4) umfassen, und mit einer einen Dehnungsausgleich bildenden Rohrstutzen (9) zwischen den Enden (8) der die Durchführungen (3) gleitfähig durchsetzenden Leitungsrohre (4), **dadurch gekennzeichnet, dass** die Rohrstutzen (9) und die Enden (8) der Leitungsrohre (4) ineinander unter Zwischenlage von Ringdichtungen (10) verschiebbar geführt sind.

2. Sonnenkollektor nach Anspruch 1, **dadurch gekennzeichnet, dass** die die Durchführungen (3) durchsetzenden Enden (8) der Leitungsrohre (4) aufgeweitete Muffen zur Aufnahme des Rohrstutzens (9) bilden.

3. Sonnenkollektor nach Anspruch 1, **dadurch gekennzeichnet, dass** der Rohrstutzen (9) die Enden (8) der Leitungsrohre (4) umschließt.

4. Sonnenkollektor nach Anspruch 3, **dadurch gekennzeichnet, dass** der Rohrstutzen (9) in wenigstens eine der beiden Durchführungen (3) für die Leitungsrohre (4) eingesetzt ist.

5. Sonnenkollektor nach einem der Ansprüche 1 bis 4, **dadurch gekennzeichnet, dass** die elastomeren Durchführungen (3) einen die Leitungrohre (4) bzw. den Rohrstutzen (9) umschließenden, einerseits mit dem Gehäuseinneren und anderseits mit einem nach unten weisenden Belüftungsansatz (14) auf der Gehäuseaußenseite strömungsverbundenen Ringspalt (12) bilden.
